# EUROPEAN PATENT APPLICATION

(11) **EP 4 368 455 A1**
(43) Date of publication of application: **15.05.2024**
(21) Application number: 22845847.7
(22) Date of filing: 14.07.2022
(51) Int. Cl.: B60R 11/02, B62D 21/02

(54) **TRUCK VEHICLE**

(30) Priority: 21.07.2021 JP 2021120952
(71) Applicant: Daimler Truck AG, 70771 Leinfelden-Echterdingen (DE)
(72) Inventor: FUJINO Tomoyasu, Kawasaki-shi, Kanagawa 211-8522 (JP)
(74) Representative: Hofstetter, Schurack & Partner
(86) International application number: PCT/JP2022/027722
(87) International publication number: WO 2023/002913

(57) **Abstract**

Provided are a battery pack 2 that is capable of supplying electric power for driving the vehicle 1, and extends outward beyond the side rail 3L, 3R in a vehicle width direction below the side rail 3L, 3R; a battery bracket 20 covering the battery pack 2; a frame bracket 30 supporting the battery bracket 20 from the side rail 3L, 3R via a mount 31; a sensor 60 capable detecting an object on a lateral side of the vehicle 1; and a sensor support bracket 50 supporting the sensor 60. The sensor support bracket 50 is provided at an end of the battery bracket 20 in the vehicle width direction, and supports the sensor 60 so that the sensor 60 is positioned on an outer side in the vehicle width direction with respect to an end surface of the battery bracket 20 in the vehicle width direction.

## Description

### TECHNICAL FIELD

The present invention relates to a truck vehicle.

### BACKGROUND ART

In recent years, from the viewpoints of safety improvement and driver assistance, commercial vehicles such as trucks have been more required to be equipped with a sensor device that detects a vehicle and the like present on a blind spot of a driver on the lateral side of the truck cab and that notifies the driver of the presence of the vehicle and the like (see Patent Document 1). Such a sensor device is mounted by being supported on a side rail via a bracket in a truck vehicle in the same manner as other vehicle-mounted devices are.

### CITATION LIST

### PATENT DOCUMENT

PATENT DOCUMENT 1: Japanese Unexamined Patent Publication No. 2009-151606

### SUMMARY OF THE INVENTION

### TECHNICAL PROBLEM

However, when such a sensor device is supported on a side rail via a bracket, the bracket needs structures that absorb deformation of the side rail and inputs of vibration. Thus, the bracket comes to have additional structures for the vibration absorption and the attenuation function, which leads to complicated structures, an increased number of components, and a higher cost.

To ensure the sensing performance, the sensor device needs to be disposed at a predetermined position distanced from the side surface of the side rail in the vehicle width direction. Accordingly, the entire length of the bracket needs to be longer. As the entire length of the bracket is longer, the input of vibration to the sensor device is larger. Accordingly, it is more difficult for the sensor device to ensure the reliability for vibration.

In view of the foregoing, it is an object of the present invention to provide a truck vehicle where a bracket supporting a sensor device has a simple structure so that the sensor device can easily ensure the reliability for vibration.

### SOLUTION TO THE PROBLEM

The present invention was made to overcome at least some of the problems described above, and can be implemented as the following embodiments or application examples.
(1) A truck vehicle of this application example includes: a pair of side rails extending in a vehicle longitudinal direction; a battery pack that is capable of supplying electric power for driving the vehicle, and extends outward beyond the side rail in a vehicle width direction below the side rail; a battery bracket covering at least an end of the battery pack in a vehicle width direction; a frame bracket supporting the battery bracket from the side rail via an elastic member; an object detection unit capable of detecting an object on a lateral side of the vehicle; and a detection unit support bracket supporting the object detection unit. The detection unit support bracket is provided at an end of the battery bracket in the vehicle width direction, and supports the object detection unit so that the object detection unit is positioned on an outer side in the vehicle width direction with respect to an end surface of the battery bracket in the vehicle width direction.

In the truck vehicle of this application example, the battery pack that supplies electric power for driving the vehicle is covered with the battery bracket, and is coupled to the side rail by the frame bracket via the elastic member. Thus, the vibration of the side rail is not directly transmitted to the battery pack because of the elastic member, and the reliability of the battery is ensured.

Then, the object detection unit capable of detecting an object on the lateral side of the vehicle is provided via the detection unit support bracket at the end of the battery bracket in the vehicle width direction covering the battery pack. The detection unit support bracket supports the object detection unit from the end of the battery bracket in the vehicle width direction so that the object detection unit is positioned on an outer side in the vehicle width direction with respect to the end surface of the battery bracket in the vehicle width direction. In this way, the detection unit support bracket is provided on the battery bracket that is elastically supported, and thus it is unnecessary for the detection unit support bracket itself to be provided with a structure for reducing vibration. The detection unit support bracket is provided at the end of the battery bracket in the vehicle width direction that covers the battery pack extending beyond the side rail in the vehicle width direction, and thus the entire length of the detection unit support bracket in the vehicle width direction can be shorter.

The detection unit support bracket is provided at the end of the battery bracket in the vehicle width direction that covers the battery pack, and thus the object detection unit and the detection unit support bracket first absorb collision energy when the lateral side of the vehicle collides with something. Thus, the reliability of the battery can be improved for the lateral side collision.

Thus, in the truck vehicle of this application example, the detection unit support bracket has a simple structure, and the object detection unit generates less vibration. Thus, the reliability for vibration can be easily ensured.

(2) In the truck vehicle of the section (1) of this application example, the detection unit support bracket may support the object detection unit so that the object detection unit is disposed in an outside region in the vehicle width direction with respect to the frame bracket.

In this way, the object detection unit is disposed in an outside region in the vehicle width direction with respect to the frame bracket, and thus the object detection unit is located close to the frame bracket to which the vibration from the side rail is transmitted in the vehicle horizontal direction. Thus, the object detection unit is less affected by the vibration.

(3) In the truck vehicle of the section (1) or (2) of this application example, the detection unit support bracket may support the object detection unit so that a center of gravity of the object detection unit is positioned higher than a lower end of the side rail in a vehicle height direction.

In this way, the object detection unit is positioned higher than the lower end of the side rail. Thus, the object detection unit is located close to the side rail in the vehicle height direction, and is less affected by the vibration. The object detection unit can be disposed at a height position appropriate for detecting an object such as a vehicle, a bicycle, a person, or the like present on the lateral side of the vehicle.

(4) In the truck vehicle of any one of the sections (1) to (3) of this application example, the detection unit support bracket may support the object detection unit so that the object detection unit is positioned higher than an upper surface of the battery bracket in the vehicle height direction.

In this way, the object detection unit is positioned higher than the upper surface of the battery bracket. Thus, the object detection unit is located close to the side rail in the vehicle height direction, and is less affected by the vibration. The object detection unit can be disposed at a height position appropriate for detecting an object such as a vehicle, a bicycle, a person, or the like present on the lateral side of the vehicle.

(5) In the truck vehicle of the sections (1) to (4) of this application example, the detection unit support bracket may support the object detection unit so that an outer side surface of the object detection unit in the vehicle width direction is positioned on an outer side in the vehicle width direction with respect to or positioned to be flush with a side surface of another vehicle member in the vehicle width direction, where the other vehicle member is mounted on the same side in the vehicle width direction as the object detection unit is.

In this way, the side surface of the object detection unit is positioned on an outer side with respect to or positioned to be flush with a side surface of another vehicle member. Thus, a detection range extending from the object detection unit over the lateral side of the vehicle is not obstructed by the other vehicle member, and the accuracy of the object detection can be ensured.

(6) In the truck vehicle of any one of the sections (1) to (5) of this application example, the battery pack may include a plurality of battery packs arranged in the vehicle longitudinal direction between wheel bases of the vehicle, and the object detection unit may be provided on the battery bracket for a foremost battery pack among the plurality of battery packs via the detection unit support bracket.

For the truck vehicle where the battery pack includes a plurality of battery packs, the object detection unit may be provided on the battery bracket for a foremost battery pack. Accordingly, in a truck whose entire length is long in the vehicle longitudinal direction, an object detection unit can be positioned to easily detect an object on a blind spot behind the front wheel.

### BRIEF DESCRIPTION OF THE DRAWINGS

FIG. 1 is a schematic top view of an overall configuration of a truck vehicle of an embodiment.
FIG. 2 is an enlarged top view of a main part of FIG. 1.
FIG. 3 is an exploded perspective view of a battery pack and a battery bracket.
FIG. 4 is a cross-sectional view taken along line A-A in FIG. 2.
FIG. 5 is a front view of a sensor support bracket as viewed in the direction of arrow B in FIG. 4.

### DESCRIPTION OF EMBODIMENTS

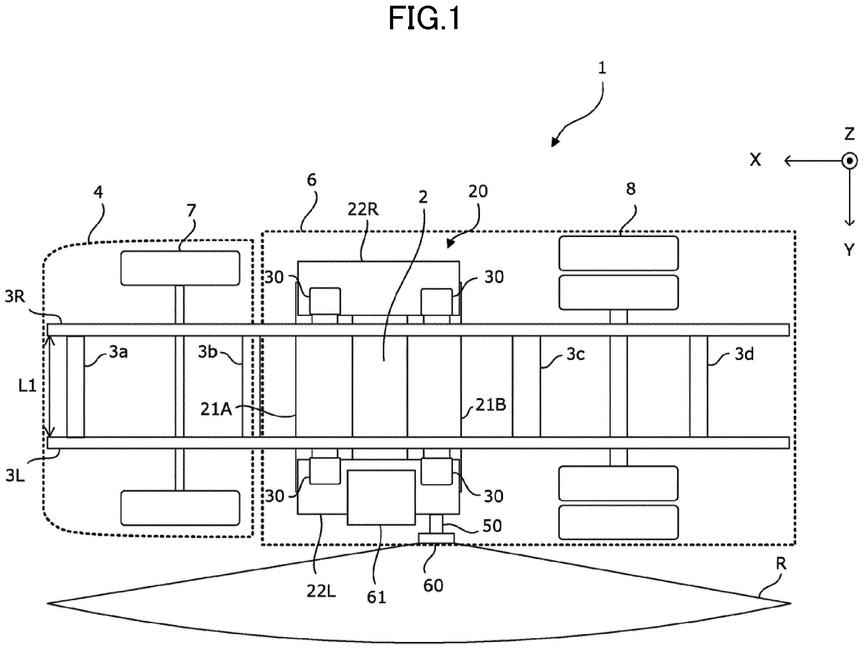

Hereinafter, an embodiment of the present invention will be described with reference to the drawings. Note that the drawings are not necessarily made according to scale. FIG. 1 is a schematic top view of an overall configuration of a truck vehicle of this embodiment.

A vehicle 1 includes a motor (electric motor) (not shown) as a driving power source, and is a so-called electric vehicle, for example. In particular, in the present embodiment, the vehicle 1 is a truck vehicle including a chassis frame on which a cab 4 and a cargo box 6 are mounted, where a driver can ride on the cab 4 and the cargo box 6 is provided behind the cab 4 and can be loaded with cargos. In the figure, the outer lines of the cab 4 and the cargo box 6 are indicated by dotted lines. The vehicle may be a hybrid vehicle including an engine in addition to the motor as a driving power source. In this embodiment, the vehicle is a so-called right-hand drive vehicle where a driver's seat is on the right side of the cab 4.

The chassis frame is a frame of a so-called ladder frame type including a pair of side rails 3L and 3R extending in the vehicle longitudinal direction (X direction) and a plurality of cross members 3a, 3b, 3c and 3d arranged between the side rails 3L and 3R in the vehicle width direction (Y direction). The chassis frame having this configuration can exhibit both static strength to withstand the weight of the truck vehicle and dynamic strength (fatigue strength) to withstand the load repeatedly generated from road surface vibrations when the vehicle is traveling.

Front wheels 7 are suspended on the front of the chassis frame, and rear wheels 8 are suspended on the rear of the chassis frame. The motor (not shown) transmits a driving force to these wheels so that the vehicle can travel. In the vehicle 1, the motor as a driving power source is equipped with a battery for supplying electric power.

The battery includes a battery unit (not shown) consisting of a plurality of secondary battery cells that is accommodated in a battery pack 2 as a housing. In this embodiment, one battery pack 2 is mounted between a wheel base located between the front wheels 7 and the rear wheels 8 in the vehicle longitudinal direction.

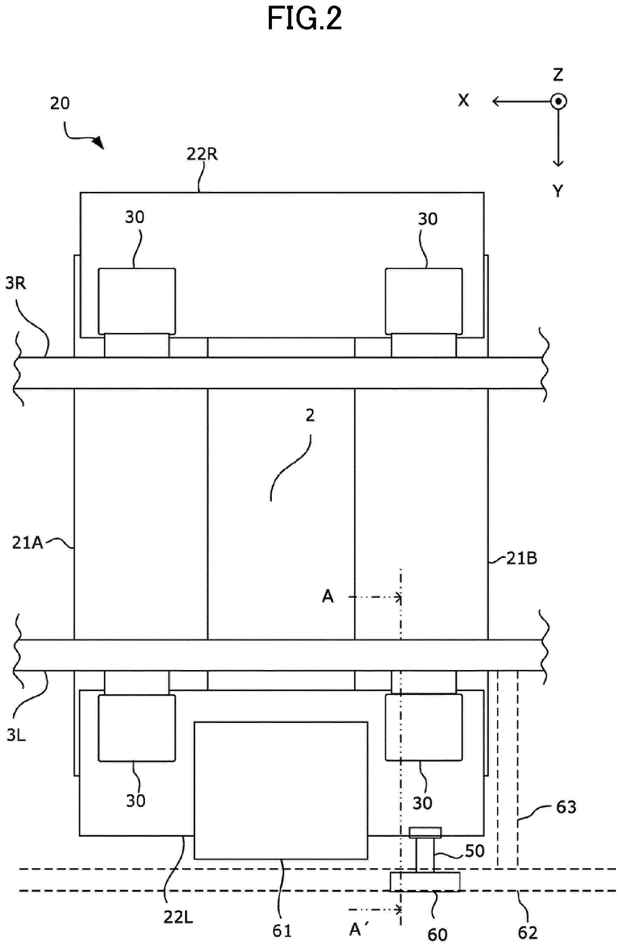

As shown in FIGS. 1 and 2, the battery pack 2 includes four side surfaces in total in the vehicle longitudinal direction and the vehicle width direction that are covered with a battery bracket 20. Specifically, the battery bracket 20 includes a pair of a front first bracket 21A and a rear first bracket 21B (also referred to as first brackets 21A and 21B together) and a pair of a left second bracket 22L and a right second bracket 22R (also referred to as second brackets 22L and 22R together).

The battery bracket 20 is coupled to and supported on the side rails 3R and 3L via frame brackets 30 each having an elastic member. Specifically, the battery bracket 20 is coupled with the frame brackets 30 at front and rear portions of the left and right second brackets 22L and 22R.

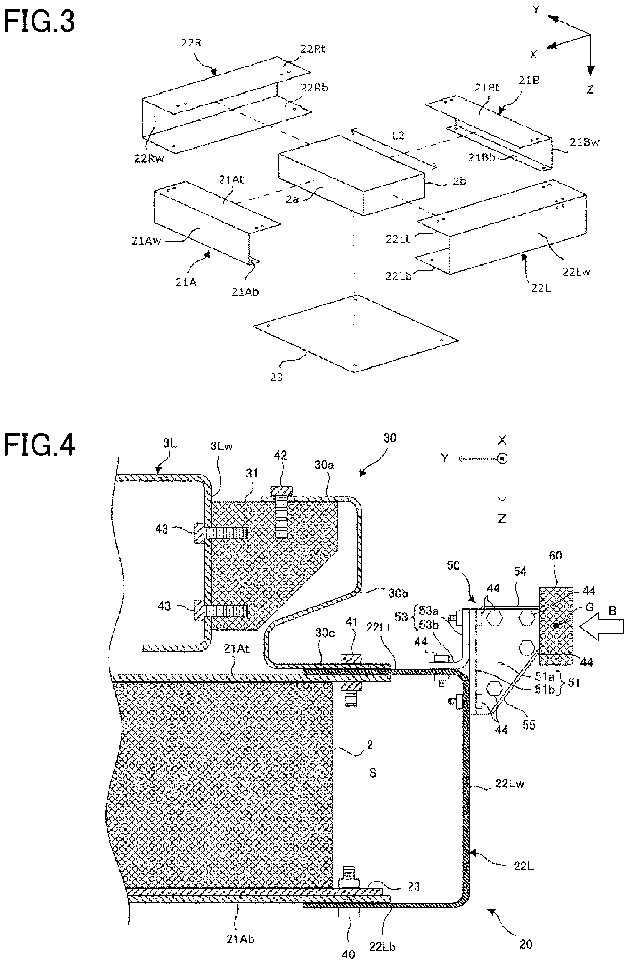

FIG. 3 is an exploded perspective view of the battery pack 2 and the battery bracket 20. The battery pack 2 has a rectangular parallelepiped shape elongated in the vehicle width direction, and includes a front surface 2a as a rectangular end surface facing the front of the vehicle and a rear surface 2b as a rectangular end surface facing the rear of the vehicle. The battery pack 2 is disposed along the vehicle width direction (Y direction) so that long sides of the front surface 2a and the rear surface 2b are perpendicular to the vehicle longitudinal direction (X direction). The battery pack 2 is dimensioned so that both ends of the battery pack 2 in the vehicle width direction are located beyond outer side surfaces of the side rails 3L and 3R in the vehicle width direction. That is, the front surface 2a and the rear surface 2b each include long sides having a length L2 that is longer than a length L1 between the side rails 3L and 3R.

The battery pack 2 is mounted directly on an under cover 23 that is made of a plateshaped member, for example. The under cover 23 simply covers a lower surface of the battery pack 2, and the battery pack 2 is directly held by the first brackets 21A and 21B.

In the figure, the front first bracket 21A includes a first web 21Aw for covering the front surface 2a of the battery pack 2. The front first bracket 21A includes a first upper flange 21At for covering a part of an upper surface of the battery pack 2 where the upper surface is continuous with the front surface 2a, and a first lower flange 21Ab for covering a part of a lower surface of the battery pack 2 where the lower surface is continuous with the front surface 2a; and the first upper flange 21 At and the first lower flange 21Ab are vertically continuous with the first web 21Aw. That is, the first upper flange 21At and the first lower flange 21Ab are disposed so that their flat surfaces face each other in the vehicle height direction (Z direction). Thus, the front first bracket 21A is formed in a substantial "U" shape that is open toward the rear side of the vehicle in a cross sectional view.

Similarly, the rear first bracket 21B includes a first web 21Bw for covering the rear face 2b of the battery pack 2. The rear first bracket 21B includes a first upper flange 21Bt for covering a part of the upper surface of the battery pack 2 where the upper surface is continuous with the rear surface 2b, and a first lower flange 21Bb for covering a part of the lower surface of the battery pack 2 where the lower surface is continuous with the rear surface 2b. That is, the first upper flange 21Bt and the first lower flange 21Bb of the rear first bracket 21B are disposed so that their flat surfaces face each other in the vehicle height direction (Z direction in FIG. 2). Thus, the rear first bracket 21B is formed in a substantial "U" shape that is open toward the front side of the vehicle in a cross sectional view.

The open sides of the first brackets 21A and 21B face each other, and the first brackets 21A and 21B sandwiches the battery pack 2 in the longitudinal direction of the vehicle to support the battery pack 2.

The left second bracket 22L includes a second web 22Lw covering open faces of left ends of the first brackets 21A and 21B in the vehicle width direction. The second web 22Lw also includes an upper end from which a second upper flange 22Lt extends between the first upper flanges 21At and 21Bt of the first brackets 21A and 21B, and which is coupled to outer sides of the first upper flanges 21At and 21Bt of the first brackets 21A and 21B in the vehicle width direction. Similarly, the second web 22Lw includes a lower end from which a second lower flange 22Lb extends between the first lower flanges 21Ab and 21Bb of the first brackets 21A and 21B, and which is coupled to outer sides of the first lower flanges 21Ab and 21Bb of the first brackets 21A and 21B in the vehicle width direction.

The right second bracket 22R has a configuration similar and horizontally symmetrical to the left second bracket 22L, and includes a second web 22Rw, an upper flange 22Rt, and a lower flange 22Rb.

Here, referring back to FIGS. 1 and 2, the battery bracket 20 is equipped with a sensor 60 (an object detection unit) via a sensor support bracket 50 (a detection unit support bracket) at an end in the vehicle width direction and a rear in the vehicle longitudinal direction of the left second bracket 22L, where the sensor 60 is capable of detecting an object on the lateral side of the vehicle. The sensor 60 is a so-called blind spot sensor detecting an object such as a vehicle, a bicycle, a person, or the like present on the lateral side of the vehicle (the laterally left side of the vehicle in this embodiment) that is a blind spot of the driver. As shown in FIG. 1, the sensor 60 is a sensor detecting an object by emitting, e.g., a microwave to a detection range R ranging from the center portion of the vehicle 1 over the left lateral side of the vehicle 1 in the vehicle longitudinal direction.

Specifically, the sensor support bracket 50 is positioned to face the rear frame bracket 30 in the vehicle width direction in the left second bracket 22L, i.e., is disposed in an outside region in the vehicle width direction with respect to the frame bracket 30. Thus, the sensor 60 is positioned to be closest to the frame bracket 30 on the left side of the left second bracket 22L.

Near the sensor 60, a low-voltage battery 61 is placed between the front and rear frame brackets 30, i.e., at the center of the left second bracket 22L in the vehicle width direction. The low-voltage battery 61 is a battery that supplies electric power to electrical components of the vehicle, and can supply electric power having a voltage lower than that of the battery pack 2 that supplies electric power for driving the vehicle. The low-voltage battery 61 has a rectangular parallelepiped shape elongated in the vehicle longitudinal direction, and is placed so as to partially protrude outward in the vehicle width direction from the left end surface (the second web 22Lw) of the left second bracket 22L.

Further, as shown by the dash line in FIG. 2, a side guard 62 extending in the vehicle longitudinal direction is located below the sensor 60, and a left stay 63 coupling the side guard 62 with the left side rail 3L is placed behind the sensor 60 in the vehicle longitudinal direction and extends in the vehicle width direction. The left side surface of the sensor 60 is positioned on an outer side in the vehicle width direction with respect to or positioned to be flush with at least the left side surfaces of the surrounding vehicle members (the battery bracket 20, the low-voltage battery 61, the side guard 62, and the stay 63) that are positioned along the vehicle longitudinal direction or below the vehicle, such that the detection range R is not obstructed.

Here, FIG. 4 is a cross-sectional view taken along line A-A of FIG. 2. Hereinafter, the configuration of the left portion of the vehicle 1 will be described in more detail with reference to this drawing.

As described above, the battery pack 2 is placed on the under cover 23, and the front portion and the rear portion of the battery pack 2 are covered with the first brackets 21A and 21B. Specifically, the first webs 21Aw and 21Bw and the first upper flanges 21At and 21Bt of the first brackets 21A and 21B are in contact with the corresponding surfaces (the front surface 2a, the rear surface 2b, and a part of the upper surface) of the battery pack 2, and the first lower flanges 21Ab and 21Bb are in contact with the under cover 23.

Further, the left second bracket 22L is spaced apart in the vehicle width direction from the left side surface of the battery pack 2 with a space S, and covers the battery pack from outside of the under cover 23 and the first brackets 21A and 21B. The size of the space S can be adjusted by changing the lengths of the second upper flange 22Lt and the second lower flange 22Lb of the left second bracket 22L in the vehicle width direction, and also can be adjusted by changing the lengths of the first brackets 21A and 21B in the vehicle width direction.

The second lower flange 22Lb of the left second bracket 22L is in contact with the first lower flanges 21Ab and 21b of the first brackets 21A and 21B. The second lower flange 22Lb of the left second bracket 22L, the first lower flanges 21Ab and 21b of the first brackets 21A and 21B, and the under cover 23 are coupled by a plurality of bolts 40 (FIG. 4 shows only one bolt).

The second upper flange 22Lt of the left second bracket 22L is in contact with the first upper flanges 21At and 21Bt of the first brackets 21A and 21B and the frame bracket 30. The second upper flange 22Lt of the left second bracket 22L, the first upper flanges 21At and 21Bt of the first brackets 21A and 21B, and the lower portion 30c of the frame bracket 30 are coupled by a plurality of bolts 41 (FIG. 4 shows only one bolt).

The frame bracket 30 is, for example, a member including an upper portion 30a, a middle portion 30b, and a lower portion 30c and having an S-shaped cross section as shown in FIG. 4, and has side surfaces provided with ribs (not shown) to improve the strength. The upper portion 30a of the frame bracket 30 is coupled to the mount 31 by a plurality of bolts 42 (FIG. 4 shows only one bolt).

The mount 31 is a member connecting the frame bracket 30 and the side rail 3L, and is coupled to a web 3Lw of the side rail 3L by a plurality of bolts 43, for example (FIG. 4 shown only two bolts). The mount 31 is, for example, a rubber mount including an elastic member such as rubber to elastically hold the frame bracket 30 on the side rail 3L.

Further, a sensor 60 is attached to a corner between the second web 22Lw and the upper flange 22Lt of the left second bracket 22L via the sensor support bracket 50. As described above, the sensor support bracket 50 extends outward in the vehicle width direction, and includes a distal end provided with the sensor 60. The sensor 60 is positioned higher than the upper flange 22Lt of the left second bracket 22L in the vehicle height direction (Z direction), and is positioned at the same height as the lower portion of the frame bracket 30, i.e., at a height approximately equivalent of the lower portion of the side rail 3L. Although the detailed structure of the sensor 60 is not shown in the drawings, a microwave emitter is provided in a plastic case serving as an outer shell, and the center of gravity G of the sensor is at least higher than the lower end of the side rail 3L.

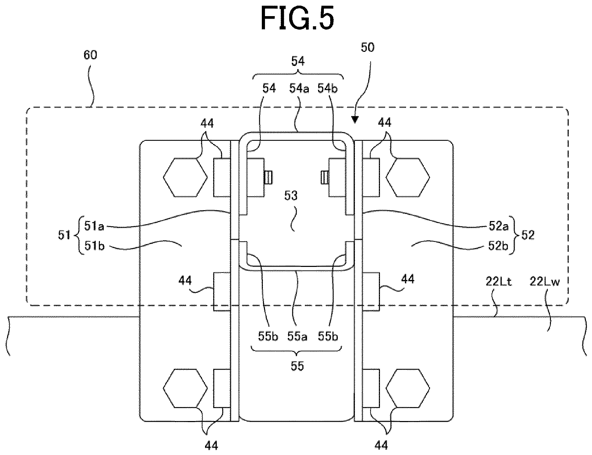

FIG. 5 is a front view of the sensor support bracket as viewed in the direction of arrow B in FIG. 4. As shown in FIGS. 4 and 5, the sensor support bracket 50 includes a pair of front and rear side plates 51 and 52, a back plate 53, and a pair of upper and lower plates 54 and 55, which are integrally coupled together by a plurality of bolts 45.

Specifically, the side plates 51 and 52 (FIG. 4 shows the front side plate 51 only) are plate members having an L-shaped lateral cross section, and include side bases 51a and 52a extending in the vehicle width direction and the vehicle height direction and side flanges 51b and 52b extending in the vehicle height direction and the vehicle longitudinal direction. The side bases 51a and 52a include a lower side inclined upward toward the outer side in the vehicle width direction to have a substantially trapezoidal shape, and the side bases 51a and 52a include an inner side in the vehicle width direction from which the side flanges 51b and 52b extend which are bent to have an L-shape lateral cross section. In the side plates 51 and 52, the side flanges 51b and 52b include a lower portion coupled to the second web 22Lw of the left second bracket 22L via the bolts 44, and the side flange 51b includes an upper portion coupled to the back plate 53 via the bolts 44.

The back plate 53 is a plate member having an L-shaped longitudinal cross section, and includes a back base 53a extending in the vehicle height direction and the vehicle longitudinal direction and a back flange 53b extending in the vehicle longitudinal direction and the vehicle width direction. The back base 53a includes a lower side in the vehicle height direction from which the back flange 53b extends which is bent toward the inner side in the vehicle width direction to have an L-shaped longitudinal cross section. In the back plate 53, the back base 53a is coupled to the side flanges 51b and 52b of the side plates 51 and 52 via the bolts 44, and the back flange 53b is coupled to the upper flange 22Lt of the left second bracket 22L via the bolts 44.

As shown in FIG. 5, the upper plate 54 is a plate member having a U-shaped cross section opening downward, and includes an upper base 54a extending in the vehicle longitudinal direction and the vehicle width direction and a pair of upper flanges 54b and 54b extending in the vehicle width direction and the vehicle height direction. The upper base 54a includes two sides in the vehicle longitudinal direction from which upper flanges 54b and 54b extend which are bent toward the lower side in the vehicle height direction to have an L-shaped longitudinal cross section. The upper plate 54 is disposed to connect upper portions of the pair of side plates 51 and 52 in the vehicle longitudinal direction. In the upper plate 54, the upper flanges 54b and 54b are coupled to the side bases 51a and 52a of the side plates 51 and 52 via the bolts 44.

As shown in FIG. 5, the lower plate 55 has a U-shaped cross section opening upward, and includes a lower base 55a extending in the vehicle longitudinal direction and the vehicle width direction and a pair of lower flanges 55b and 55b extending in the vehicle width direction and the vehicle height direction. The lower base 55a includes two sides in the vehicle longitudinal direction from which the lower flanges 55b and 55b extend which are bent toward the upper side in the vehicle height direction to have an L-shaped longitudinal cross section. The lower plate 55 is disposed to connect the inclined lower sides of the side bases 51a and 52a of the pair of side plates 51 and 52 in the vehicle longitudinal direction. In the lower plate 55, the lower flanges 55b and 55b are coupled to the side bases 51a and 52a of the side plates 51 and 52 via the bolts 44.

The sensor support bracket 50 configured in this manner has a simple configuration constituted by the bent plate members only, and includes an outer distal end in the vehicle width direction that supports the sensor 60.

As described above, in the vehicle 1 of the present embodiment, the battery pack 2 that supplies electric power for driving the vehicle 1 is covered with the battery bracket 20, and is coupled to the side rail 3L by the frame bracket 30 via the mount 31. Thus, the vibration of the side rail 3L is not directly transmitted to the battery pack 2 because of the mount 31, and the reliability of the battery is ensured.

Then, the battery pack 2 is covered by the battery bracket 20 having a left end in the vehicle width direction that is provided with the sensor 60 via the sensor support bracket 50, where the sensor 60 is capable of detecting an object on the lateral side of the vehicle. The sensor support bracket 50 supports the sensor 60 from the left end of the battery bracket 20 in the vehicle width direction so that the sensor 60 is positioned on an outer side in the vehicle width direction with respect to the second web 22Lw serving as an end surface of the battery bracket 20 in the vehicle width direction. In this way, the sensor support bracket 50 is provided on the battery bracket 20 that is elastically supported, and thus it is unnecessary for the sensor support bracket 50 itself to be provided with a structure for reducing vibration. The sensor support bracket 50 is provided at the end of the battery bracket 20 in the vehicle width direction that covers the battery pack 2 extending beyond the side rail 3L in the vehicle width direction, and thus the entire length of the sensor support bracket 50 in the vehicle width direction can be shorter.

The sensor support bracket 50 is provided at the end of the battery bracket 20 in the vehicle width direction that covers the battery pack 2, and thus the object detection unit and the detection unit support bracket first absorb collision energy when the lateral side of the vehicle collides with something. Thus, the reliability of the battery can be improved for the lateral side collision.

Thus, in the vehicle 1 of the present embodiment, the sensor support bracket 50 has a simple structure, and the sensor 60 generates less vibration. Thus, the reliability for vibration can be easily ensured.

The sensor support bracket 50 of the present embodiment supports the sensor 60 so that the sensor 60 is disposed in an outside region in the vehicle width direction with respect to the frame bracket 30. In this way, the sensor 60 is disposed in an outside region in the vehicle width direction with respect to the frame bracket 30, and thus the sensor 60 is located close to the frame bracket 30 to which the vibration from the side rail 3L is transmitted in the vehicle horizontal direction. Thus, the sensor is less affected by the vibration.

The sensor support bracket 50 supports the sensor 60 so that the center of gravity G of the sensor 60 is positioned higher than the lower end of the side rail 3L in the vehicle height direction. Further, the sensor support bracket 50 supports the sensor 60 so that the sensor 60 is positioned higher than the upper surface of the battery bracket in the vehicle height direction.

In this way, the sensor 60 is located close to the side rail 3L in the vehicle height direction. Thus, the sensor is less affected by the vibration. The sensor 60 can be disposed at a height position appropriate for detecting an object such as a vehicle, a bicycle, a person, or the like present on the lateral side of the vehicle.

The sensor support bracket 50 supports the sensor 60 so that the outer side surface of the sensor 60 in the vehicle width direction is positioned on an outer side in the vehicle width direction with respect to or positioned to be flush with the side surfaces of the other vehicle members in the vehicle width direction, where the other vehicle members such as the low-voltage battery 61, the side guard 62, and the stay 63 are mounted on the same side in the vehicle width direction as the sensor 60 is. Thus, the detection range R extending from the sensor 60 over the lateral side of the vehicle is not obstructed by the other vehicle members, and the accuracy of the object detection can be ensured.

Although the description of the embodiment of the truck vehicle of the present invention is ended here, the present invention is not limited to this embodiment.

For example, in the above embodiment, the single battery pack 2 is mounted on the vehicle 1. However, when a plurality of battery packs are mounted between wheel bases in a larger truck, a sensor is provided on a battery bracket for the foremost battery pack. Thus, in a truck whose entire length is long in the vehicle longitudinal direction, a sensor can be positioned to easily detect an object on a blind spot behind the front wheel.

In the above embodiment, the single sensor 60 detecting an object on the lateral side of the vehicle is arranged at the rear left portion of the vehicle in the battery bracket 20, but the number and arrangement of sensors are not limited. For example, for a vehicle such as a large truck having more blind spots or for further improvement in the accuracy of collision prevention and collision safety, sensors may be provided on both left and right sides of the vehicle to detect objects on both left and right lateral sides of the vehicle.

The position at which the sensor is supported via the sensor support bracket may be a different position from that of the above embodiment in a region of the frame bracket in the vehicle width direction. The frame bracket is not limited to the four frame brackets of the above embodiment, and may be more than four frame brackets or less than four frame brackets.

In the above embodiment, the battery bracket 20 includes the first brackets 21A and 21B and the second brackets 22L and 22R. However, the battery bracket is not limited to this shape as long as the battery bracket 20 covers at least the end of the battery pack in the vehicle width direction. For example, the first bracket and the second bracket may be a vertically combined pair of upper and lower bracket members having an L-shaped cross section, or may be a pair of front and rear first brackets or left and right second brackets integrated to have a cylindrical shape.

Although the embodiments of the present invention have been described above, the present invention can be implemented in various other forms, and various omissions, replacements, and changes can be made without departing from the spirit of the present invention. The embodiments and variations are included in the scope and spirit of the invention, as well as in the invention of claims and the equivalents thereof.

### DESCRIPTION OF REFERENCE CHARACTERS

1 Vehicle
2, 2A, 2B, 2C Battery Pack
3L, 3R Side Rail
10, 10A, 10B, 10C Support Device
20 Battery Bracket
21A, 21B First Bracket
22L, 22R Second Bracket
23 Under Cover
30 Frame Bracket
31 Mount

## Claims

1. A truck vehicle comprising:
a pair of side rails extending in a vehicle longitudinal direction;
a battery pack that is capable of supplying electric power for driving the vehicle, and extends outward beyond the side rail in a vehicle width direction below the side rail;
a battery bracket covering at least an end of the battery pack in a vehicle width direction;
a frame bracket supporting the battery bracket from the side rail via an elastic member;
an object detection unit capable of detecting an object on a lateral side of the vehicle; and
a detection unit support bracket supporting the object detection unit,
wherein
the detection unit support bracket is provided at an end of the battery bracket in the vehicle width direction, and supports the object detection unit so that the object detection unit is positioned on an outer side in the vehicle width direction with respect to an end surface of the battery bracket in the vehicle width direction.

2. The truck vehicle of claim 1, wherein
the detection unit support bracket supports the object detection unit so that the object detection unit is disposed in an outside region in the vehicle width direction with respect to the frame bracket.

3. The truck vehicle of claim 1 or 2, wherein
the detection unit support bracket supports the object detection unit so that a center of gravity of the object detection unit is positioned higher than a lower end of the side rail in a vehicle height direction.

4. The truck vehicle of any one of claims 1 to 3, wherein
the detection unit support bracket supports the object detection unit so that the object detection unit is positioned higher than an upper surface of the battery bracket in the vehicle height direction.

5. The truck vehicle of any one of claims 1 to 4, wherein
the detection unit support bracket supports the object detection unit so that an outer side surface of the object detection unit in the vehicle width direction is positioned on an outer side in the vehicle width direction with respect to or positioned to be flush with a side surface of another vehicle member in the vehicle width direction, where the other vehicle member is mounted on the same side in the vehicle width direction as the object detection unit is.

6. The truck vehicle of any one of claims 1 to 5, wherein
the battery pack includes a plurality of battery packs arranged in the vehicle longitudinal direction between wheel bases of the vehicle, and
the object detection unit is provided on the battery bracket for a foremost battery pack among the plurality of battery packs via the detection unit support bracket.
